# EUROPEAN PATENT SPECIFICATION

(11) **EP 3 296 806 B1**
(45) Date of publication and mention of the grant of the patent: **14.10.2020**
(21) Application number: 17178890.4
(22) Date of filing: 29.06.2017
(51) Int. Cl.: G02F 1/125, G02F 1/025, G02F 1/35

(54) **ACOUSTIC RIDGE OR RIB WAVEGUIDES IN LOW-LOSS INTEGRATED OPTICAL PLATFORMS**
AKUSTISCHER KAMM- ODER RIPPENWELLENLEITER IN VERLUSTARMEN INTEGRIERTEN OPTISCHEN PLATTFORMEN
GUIDES D'ONDES À NERVURE SAILLIE OU ACOUSTIQUE DANS DES PLATES-FORMES OPTIQUES INTÉGRÉS À FAIBLES PERTES

(30) Priority: 20.09.2016 US 201662397064 P; 10.05.2017 US 201715591747
(43) Date of publication of application: 21.03.2018
(73) Proprietor: Honeywell International Inc., Morris Plains, NJ 07950 (US)
(72) Inventor: PUCKETT, Matthew Wade, Morris Plains, NJ 07950 (US); QIU, Tiequn, Morris Plains, NJ 07950 (US); SALIT, Mary K., Morris Plains, NJ 07950 (US); WU, Jianfeng, Morris Plains, NJ 07950 (US)
(74) Representative: Houghton, Mark Phillip

(56) References cited:
- US-A1- 2003 176 002
- HEEDEUK SHIN ET AL: "Tailorable stimulated Brillouin scattering in nanoscale silicon waveguides", NATURE COMMUNICATIONS, vol. 4, 6 June 2013 (2013-06-06), XP55436873, DOI: 10.1038/ncomms2943
- RAKICH PETER T ET AL: "Traveling-wave photon-phonon coupling as the basis for new signal processing technologies", VISUAL COMMUNICATIONS AND IMAGE PROCESSING; 20-1-2004 - 20-1-2004; SAN JOSE,, vol. 9083, 5 June 2014 (2014-06-05), pages 908317-908317, XP060037115, DOI: 10.1117/12.2051334 ISBN: 978-1-62841-730-2
- CHRISTOPHER G. POULTON ET AL: "Acoustic confinement and stimulated Brillouin scattering in integrated optical waveguides", JOURNAL OF THE OPTICAL SOCIETY OF AMERICA - B., vol. 30, no. 10, 12 September 2013 (2013-09-12), page 2657, XP55436849, US ISSN: 0740-3224, DOI: 10.1364/JOSAB.30.002657

## Description

### CROSS REFERENCE TO RELATED APPLICATION

This application claims the benefit of priority to U.S. Provisional Application No. 62/397,064, filed on September 20, 2016.

### STATEMENT REGARDING FEDERALLY SPONSORED RESEARCH OR DEVELOPMENT

This invention was made with Government support under N66001-16-C-4017 awarded by SPAWAR Systems Center Pacific. The Government has certain rights in the invention. This material is based upon work supported by the Defense Advanced Research Projects Agency (DARPA) and Space and Naval Warfare Systems Center Pacific (SSC Pacific).

### BACKGROUND

Brillouin scattering, an interaction between light and sound which results in the exchange of energy among optical wavelengths, can be leveraged to create high-sensitivity integrated ring laser gyroscopes. Brillouin scattering benefits both from low-loss guiding of light and guiding of acoustic waves, but typically, it is difficult to attain both of these properties simultaneously in integrated waveguides.

In the past, high Brillouin gain coefficients have been realized in integrated devices by suspending unclad waveguides in air, thereby removing the path by which acoustic waves can radiate away. However, this technique comes at the cost of increasing optical propagation loss, due to the increased overlap of the optical mode with high-index-contrast material interfaces. Furthermore, unclad waveguides such as these are very susceptible to physical damage, making them less viable for practical or commercial applications.

Alternatively, ultra-low loss waveguides have been produced by reducing optical confinement in thin films of silicon nitride surrounded by silicon dioxide. In these devices, the low propagation loss cannot be attained without expanding the mode area, and no acoustic guiding is present. The Brillouin gain coefficient of these devices is thus expected to be low.

HEEDEUK, Shin et al., in "Tailorable stimulated Brillouin Scattering in Nanoscale Silicon Waveguides", Nature Communications Vol 4, 6 June 2013, demonstrates stimulated Brillouin scattering in a silicon waveguide embedded within the centre of a series of five suspended phononic waveguide segments, using a tensile silicon nitride membrane. RAKICH, Peter et al., in "Travelling-Wave Photon-Phonon Coupling as the Basis for New Signal Processing Technologies", Visual Communication and Image Processing, 20 Jan 2004, discusses a silicon nanophotonic waveguide embedded within the centre of a series of three suspended phononic resonators. Total internal reflection between silicon (n=3.5) and silicon nitride (n=2.0) tightly confines the optical mode to the silicon waveguide core, while the patterned silicon nitride membrane acts to confine the generated phonons. POULTON, Christopher G et al., in "Acoustic Confinement and Stimulated Brillouin Scattering in Integrated Optical Waveguides", Journal of the Optical Society of America - B vol. 30, no. 10, 12 September 2013, discusses the effect of acoustic mode confinement on SBS in a waveguide that consists of a guiding core embedded in a solid substrate, and model the effects of the acoustic properties of the core compared with the cladding. Patent Application Publication US2003/176002A1 discloses a method for manufacturing an optical waveguide including depositing a lower cladding layer, coating a photoresist layer on the lower cladding layer, patterning the photoresist layer to create channels using etching.

### SUMMARY

The present invention in its various aspects is as set out in the appended claims. A waveguide device comprises a substrate having an upper surface and a first width; a cladding layer over the upper surface of the substrate, the cladding layer comprising a first material having a first refractive index, wherein the cladding layer has a second width that is less than the first width; and an optical core surrounded by the cladding layer, the optical core comprising a second material having a second refractive index that is higher that the first refractive index such that an optical signal will propagate through the optical core. The cladding layer that surrounds the optical core has a thickness configured to substantially confine acoustic waves to the cladding layer when the optical signal propagates through the optical core.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a cross-sectional end view of an acoustic rib waveguide device according to one embodiment;
Figure 2 is a cross-sectional end view of an acoustic ridge waveguide device according to another embodiment;
Figures 3A-3C are end views showing an exemplary method of fabricating an acoustic rib waveguide device;
Figures 4A-4C are end views showing an exemplary method of fabricating an acoustic ridge waveguide device;
Figures 5A-5D are graphical representations of lowest-order acoustic modes for acoustic ridge waveguide devices with different sized cladding regions;
Figure 6 is a graphical representation of the lowest-order acoustic mode for an acoustic rib waveguide device; and
Figure 7 is a perspective view of an integrated fiber optic gyroscope that can employ an acoustic rib or ridge waveguide device, according to an exemplary embodiment.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

Waveguide devices are disclosed in which acoustic waves are confined to an area around a waveguide core without significantly altering or inducing the optical propagation loss of the waveguide devices. In one embodiment, an acoustic ridge waveguide in a low-loss integrated optical platform is provided. In another embodiment, an acoustic rib waveguide in a low-loss integrated optical platform is provided.

The waveguides devices can be fabricated by removing a range of cladding material surrounding a waveguide optical core, while the remaining cladding material is protected with a mask. This results in the formation of an acoustic ridge or rib waveguide that confines acoustic waves to the area around the optical core.

For example, the cladding region surrounding the optical core can be etched away by a thickness ranging from about 1-30 microns, and a width around the waveguide ranging from about 1-30 microns can be protected from the etch with a mask composed of photoresist, electron beam resist, a metal, or the like.

The present approach provides for fabricating waveguide devices with tailorable optical loss and confinement, as well as acoustic confinement. For example, the degree of acoustic confinement may be increased by reducing the dimensions of the cladding region surrounding the optical waveguide, or vice versa. The boundaries of the acoustic waveguide may be placed closer to the optical waveguide without inducing additional scattering loss if the optical mode area is small, corresponding to a high degree of optical confinement.

This technique allows for an increased and tunable Brillouin gain coefficient without making concessions in terms of the optical propagation loss of the waveguide device. During operation of the waveguide device, an optical mode is excited at the input of the waveguide device, such as with a laser. Due to the electrostriction of the guiding material, acoustic waves will be generated that tend to radiate outward away from the waveguide device. The solid-air material interfaces above and to either side of the waveguide device will reflect the acoustic waves back toward the optical mode at the center of the cladding material, as will the material interface between the cladding and substrate material below the waveguide. This will increase the degree of interaction between the optical and acoustic waves, thereby increasing the Brillouin gain coefficient.

Further details of the present waveguide devices and methods for their fabrication are described hereafter with reference to the drawings.

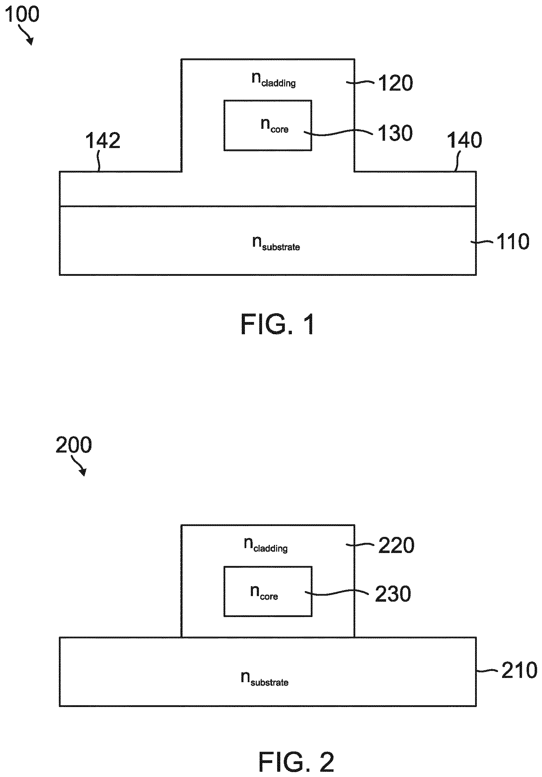

Figure 1 illustrates an acoustic rib waveguide device 100, according to one embodiment. The waveguide device 100 generally includes a substrate 110, a cladding layer 120 over an upper surface of substrate 110, and an optical core 130 embedded in and surrounded by cladding layer 120. In addition, opposing rib sections 140, 142 extend from lower portions of sidewall surfaces of cladding layer 120, over the upper surface of substrate 110.

The cladding layer 120 and rib sections 140, 142 are composed of a first material having a first refractive index (*n*_{cladding}). The optical core 130 is composed of a second material having a second refractive index (*n*_{core}) that is higher that the first refractive index, such that an optical signal will propagate through optical core 130. In addition, the thickness of cladding layer 120 around optical core 130 is configured to substantially confine acoustic waves to cladding layer 120 when an optical signal propagates through optical core 130.

The optical core 130 can be composed of various optical guiding materials. Exemplary optical guiding materials include silicon, silicon nitride (SiNx), silicon oxynitride (SiON), silicon carbide (SiC), diamond, silicon germanium (SiGe), germanium, gallium arsenide (GaAs), gallium nitride (GaN), gallium phosphide (GaP), lithium niobate (LiNbO₃), or combinations thereof.

The cladding layer 120 can be composed of various cladding materials, such as silicon dioxide (SiO₂), silicon oxynitride, zinc oxide (ZnO), aluminum oxide (Al₂O₃), calcium fluoride (CaF₂), or combinations thereof

The substrate 110 can be composed of any wafer material (*n*_{substrate}) that is atomically flat, such as any of the above materials. The optical and acoustic properties of substrate 110 do not matter, because the substrate should be far enough removed from optical core 130 to not interact with the waveguide operation. However, for acoustic guiding, the cladding material needs to possess an acoustic velocity (speed of sound) which is distinct from the substrate material acoustic velocity, in order to reflect acoustic waves.

Figure 2 illustrates an acoustic ridge waveguide device 200, according to another embodiment. The waveguide device 200 generally includes a substrate 210, a cladding layer 220 over an upper surface of substrate 210, and an optical core 230 embedded in and surrounded by cladding layer 220. The waveguide device 200 does not include any rib sections as described above for waveguide device 100. This leaves the upper surface of substrate 210 exposed on either side of the sidewall surfaces of cladding layer 220.

The cladding layer 220 is composed of a first material having a first refractive index (*n*_{cladding}), and optical core 230 is composed of a second material having a second refractive index (*n*_{core}) that is higher that the first refractive index, such that an optical signal will propagate through optical core 230. In addition, the thickness of cladding layer 220 around optical core 230 is configured to substantially confine acoustic waves to cladding layer 220 when an optical signal propagates through optical core 230. The optical core 230, cladding layer 220, and substrate 210 can be composed of the same materials as described above for waveguide device 100.

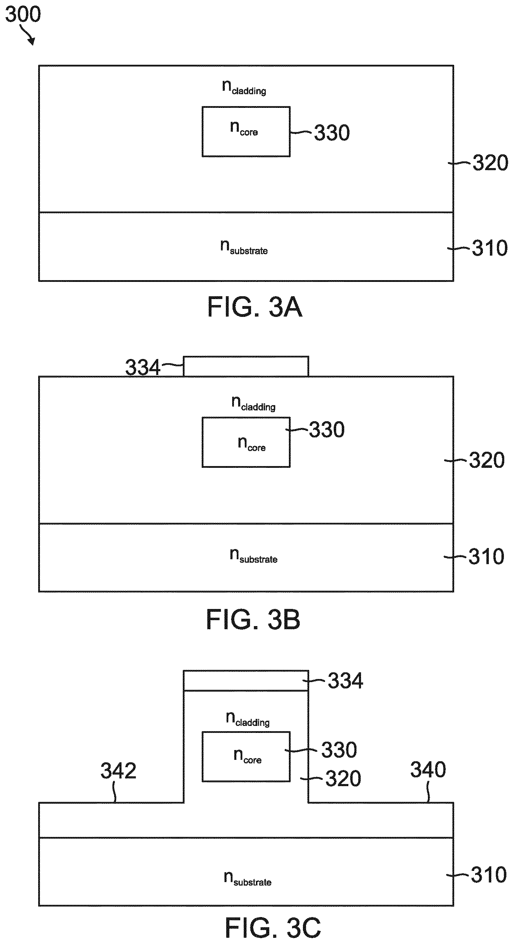

Figures 3A-3C depict an exemplary method of fabricating an acoustic rib waveguide device. Fabrication of the acoustic rib waveguide device begins with an integrated optical waveguide 300, as shown in Figure 3A. The integrated optical waveguide 300 may be formed through a number of different conventional techniques. The integrated optical waveguide 300 is formed with a wafer substrate 310, a cladding layer 320 supported by wafer substrate 310, and an optical core 330 embedded in cladding layer 320. The material of optical core 330 has a refractive index larger than that of the surrounding material of cladding layer 320 and supports optical modes that are confined near to the waveguide. It is additionally necessary for acoustic guiding that the material of cladding layer 320 possesses an acoustic velocity which is distinct from wafer substrate 310, in order to reflect acoustic waves.

Following deposition of a top portion of cladding layer 320 over optical core 330 to form integrated optical waveguide 300, a range of cladding material surrounding optical core 330 is to be removed, while the remaining cladding material is protected with a mask 334, as shown in Figure 3B. The protection may be achieved by using a mask composed of photoresist, electron beam resist, or a metal.

A wet or dry etch step can then be carried out, as depicted in Figure 3C, during which the area of cladding layer 320 surrounding core 330 and below mask 334 is protected. The etch step is performed partially through cladding layer 320 to leave opposing rib sections 340 and 342, composed of the cladding material, over the upper surface of substrate 310, resulting in formation of the acoustic rib waveguide device. In an optional step, mask 334 may then be removed from remaining cladding layer 320 by conventional techniques.

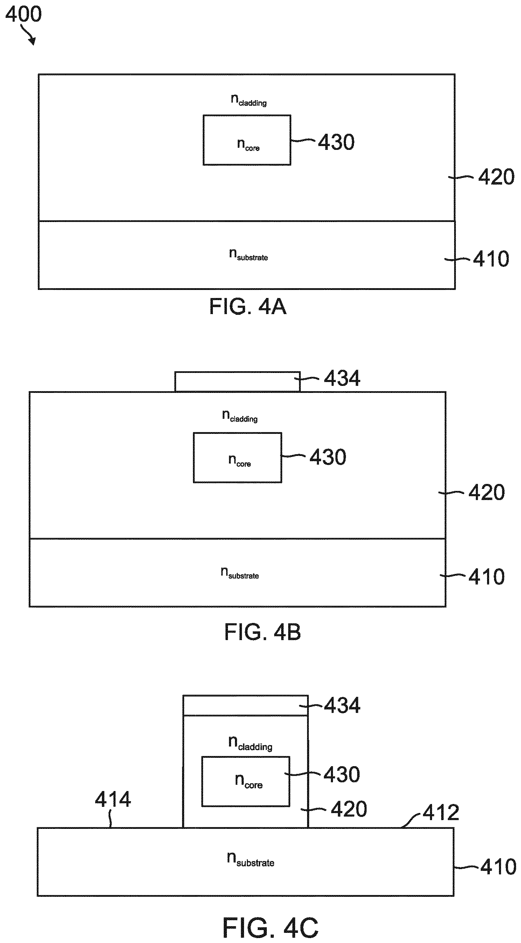

Figures 4A-4C depict an exemplary method of fabricating an acoustic ridge waveguide device. Fabrication of the acoustic ridge waveguide device begins with an integrated optical waveguide 400, as shown in Figure 4A. The integrated optical waveguide 400 may be formed through a number of different conventional techniques. The integrated optical waveguide 400 is formed with a wafer substrate 410, a cladding layer 420 supported by wafer substrate 410, and an optical core 430 embedded in cladding layer 420. The material of optical core 430 has a refractive index larger than that of the surrounding material of cladding layer 420, and the cladding material has an acoustic velocity that is distinct from wafer substrate 410.

Following deposition of a top portion of cladding layer 420 over optical core 430 to form integrated optical waveguide 400, a range of cladding material surrounding optical core 430 is to be removed, while the remaining cladding material is protected with a mask 434, as shown in Figure 4B. The protection may be achieved by using a mask composed of photoresist, electron beam resist, or a metal.

A wet or dry etch step can then be carried out, as depicted in Figure 4C, during which the area of cladding layer 420 surrounding optical core 430 and below mask 434 is protected. The etch step is performed to remove the entire thickness of cladding layer 420 not protected by mask 434. This leaves exposed portions 412 and 414 of the upper surface of substrate 410 on either side of sidewall surfaces of cladding layer 420, resulting in formation of the acoustic ridge waveguide device. In an optional step, mask 434 may then be removed from remaining cladding layer 420 by conventional techniques.

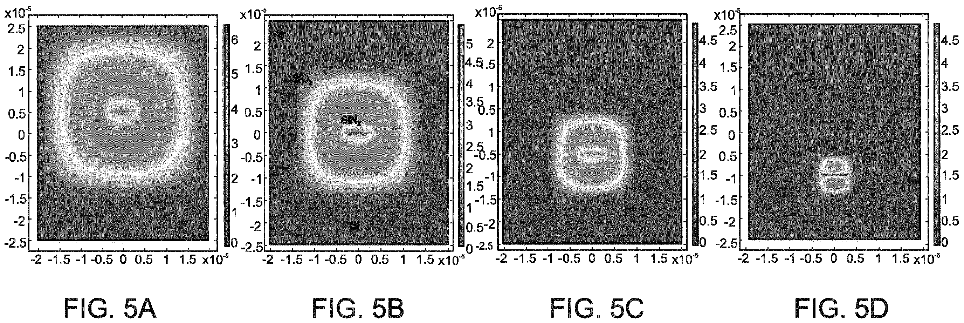

Figures 5A-5D are modeled graphical representations of the lowest-order acoustic modes for acoustic ridge waveguides, which are supported by different sized cladding regions of silicon dioxide on a silicon substrate, with the cladding regions surrounding a silicon nitride optical waveguide. Figure 5A corresponds to the largest cladding region, and Figure 5D corresponds to the smallest cladding region. Figures 5A-5D show that the acoustic mode area decreases as the silicon dioxide ridge dimensions decrease, leading to an increase in the Brillouin gain coefficient.

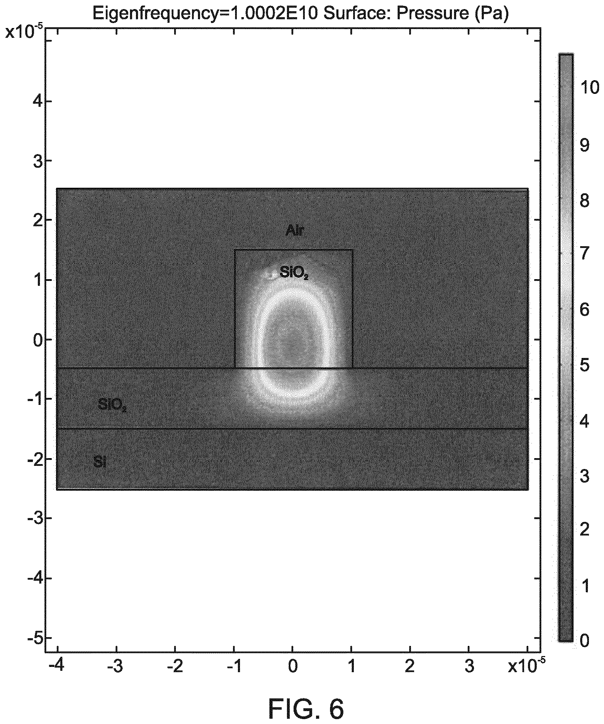

Figure 6 is a modeled graphical representation of the lowest-order acoustic mode for an acoustic rib waveguide, which is supported by a cladding region of silicon dioxide surrounding an optical waveguide, and a rib layer of silicon dioxide on a silicon substrate. Figure 6 shows that the silicon dioxide portion of the waveguide does not need to be fully etched in order to confine acoustic modes to the area around the optical waveguide, or to increase the Brillouin gain coefficient.

The acoustic rib or ridge waveguide devices disclosed herein may be used, for example, in an integrated photonics circuit, in either a straight waveguide or a resonator, to couple energy from a forward propagating pump wave into a counter-propagating Stokes wave. This process may be cascaded multiple times, corresponding to the generation of higher-order Stokes waves propagating in alternating directions. The Stokes waves may act as carriers for data encoded in the optical regime, may serve to monitor the Sagnac effect in optical gyroscopes, or may monitor the temperature and stress in the constituent integrated photonics circuit.

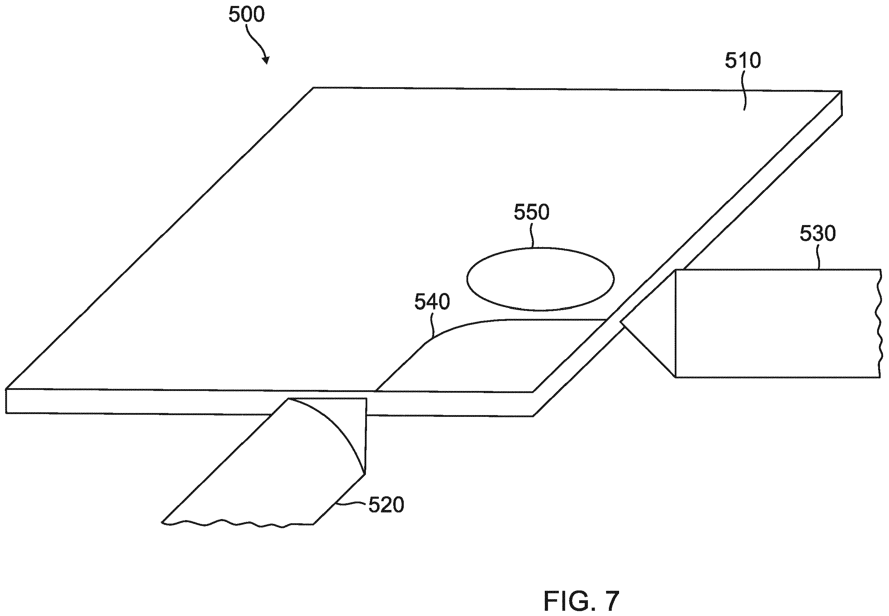

Figure 7 illustrates an example of an integrated fiber optic gyroscope 500, which can employ the acoustic rib or ridge waveguide devices. The fiber optic gyroscope 500 includes an integrated photonics circuit or chip 510, which is in optical communication with an input optical fiber 520 and an output optical fiber 530. The input optical fiber 520 directs a light beam from a source to a waveguide 540, such as an acoustic rib or ridge waveguide, in chip 510. Counter-propagating light beams are generated in one or more ring resonators 550 coupled to waveguide 540 in chip 510. The beat frequencies of the counter-propagating light beams are used to determine the rate of rotation based on output optical signals received by output optical fiber 530.

### Example Embodiments

Example 1 includes a waveguide device comprising: a substrate having an upper surface and a first width; a cladding layer over the upper surface of the substrate, the cladding layer comprising a first material having a first refractive index, wherein the cladding layer has a second width that is less than the first width; and an optical core surrounded by the cladding layer, the optical core comprising a second material having a second refractive index that is higher that the first refractive index such that an optical signal will propagate through the optical core; wherein the cladding layer that surrounds the optical core has a thickness configured to substantially confine acoustic waves to the cladding layer when the optical signal propagates through the optical core.
Example 2 includes the waveguide device of Example 1, further comprising opposing rib sections on the upper surface of the substrate, the opposing rib sections located on opposite sides of the cladding layer.
Example 3 includes the waveguide device of Example 2, wherein the rib sections comprise the first material having the first refractive index.
Example 4 includes the waveguide device of Example 1, wherein the upper surface of the substrate is exposed on opposite sides of the cladding layer.
Example 5 includes the waveguide device of any of Examples 1-4, wherein the first material of the cladding layer comprises silicon dioxide, silicon oxynitride, zinc oxide, aluminum oxide, calcium fluoride, or combinations thereof.
Example 6 includes the waveguide device of any of Examples 1-5, wherein the second material of the optical core comprises silicon, silicon nitride, silicon oxynitride, silicon carbide, diamond, silicon germanium, germanium, gallium arsenide, gallium nitride, gallium phosphide, lithium niobate, or combinations thereof.
Example 7 includes the waveguide device of any of Examples 1-6, wherein the first material of the cladding layer has an acoustic velocity that is different than an acoustic velocity of the substrate.
Example 8 includes the waveguide device of any of Examples 1-7, wherein the waveguide device is implemented in an integrated photonics circuit or chip.
Example 9 includes the waveguide device of Example 8, wherein the integrated photonics circuit or chip is part of a fiber optic gyroscope.
Example 10 includes a method of fabricating a waveguide device, the method comprising: providing an integrated optical waveguide comprising a wafer substrate having an upper surface; a cladding layer supported by the wafer substrate, the cladding layer comprising a first material having a first refractive index; and an optical core surrounded by the cladding layer, the optical core comprising a second material having a second refractive index that is higher that the first refractive index. The method also comprises forming a mask on a portion of an upper surface of the cladding layer over the optical core; and removing a portion of the cladding layer unprotected by the mask such that the optical core is embedded in a remaining portion of the cladding layer; wherein the remaining portion of the cladding layer has a thickness that substantially confines acoustic waves to the remaining portion of the cladding layer when an optical signal propagates through the optical core.
Example 11 includes the method of Example 10, wherein the portion of the cladding layer is removed such that opposing rib sections of cladding material are formed on the upper surface of wafer substrate.
Example 12 includes the method of Example 10, wherein the portion of the cladding layer is removed such that the upper surface of the substrate is exposed on opposite sides of the cladding layer.
Example 13 includes the method of any of Examples 10-12, wherein the first material of the cladding layer comprises silicon dioxide, silicon oxynitride, zinc oxide, aluminum oxide, calcium fluoride, or combinations thereof.
Example 14 includes the method of any of Examples 10-13, wherein the second material of the optical core comprises silicon, silicon nitride, silicon oxynitride, silicon carbide, diamond, silicon germanium, germanium, gallium arsenide, gallium nitride, gallium phosphide, lithium niobate, or combinations thereof.
Example 15 includes the method of any of Examples 10-14, wherein the first material of the cladding layer has an acoustic velocity that is different than an acoustic velocity of the wafer substrate.
Example 16 includes the method of any of Examples 10-15, wherein the portion of the cladding layer is removed by a wet etch or a dry etch.
Example 17 includes the method of any of Examples 10-16, wherein the mask comprises a photoresist, an electron beam resist, or a metal.
Example 18 includes the method of any of Examples 10-17, further comprising removing the mask after the portion of the cladding layer is removed.
Example 19 includes the method of any of Examples 10-18, wherein the waveguide device is formed as part of an integrated photonics circuit or chip.

The present invention may be embodied in other specific forms without departing from its essential characteristics. The described embodiments are to be considered in all respects only as illustrative and not restrictive. The scope of the invention is therefore indicated by the appended claims rather than by the foregoing description.

## Claims

1. A waveguide device (100, 200), comprising:
a substrate (110, 210) having an upper surface and a first width;
a cladding layer (120, 220) over the upper surface of the substrate, the cladding layer comprising a first material having a first refractive index, wherein the cladding layer has a second width that is less than the first width; and
an optical core (130, 230) embedded in and surrounded by the cladding layer, the optical core comprising a second material having a second refractive index that is higher than the first refractive index such that an optical signal will propagate through the optical core;
wherein the cladding layer that surrounds the optical core has a thickness configured to substantially confine acoustic waves to the cladding layer when the optical signal propagates through the optical core;
wherein the waveguide device is an acoustic ridge or rib waveguide, and is configured to generate a counter-propagating Stokes wave when the optical signal propagates through the optical core.

2. The waveguide device of claim 1, further comprising opposing rib sections (140, 142) on the upper surface of the substrate, the opposing rib sections located on opposite sides of the cladding layer.

3. The waveguide device of claim 2, wherein the rib sections comprise the first material having the first refractive index.

4. The waveguide device of claim 1, wherein the upper surface of the substrate is exposed on opposite sides of the cladding layer.

5. The waveguide device of claim 1, wherein the first material of the cladding layer comprises silicon dioxide, silicon oxynitride, zinc oxide, aluminum oxide, calcium fluoride, or combinations thereof.

6. The waveguide device of claim 1, wherein the second material of the optical core comprises silicon, silicon nitride, silicon oxynitride, silicon carbide, diamond, silicon germanium, germanium, gallium arsenide, gallium nitride, gallium phosphide, lithium niobate, or combinations thereof.

7. The waveguide device of claim 1, wherein the first material of the cladding layer has an acoustic velocity that is different than an acoustic velocity of the substrate.

8. The waveguide device of claim 1, wherein the waveguide device is implemented in an integrated photonics circuit or chip.

9. The waveguide device of claim 8, wherein the integrated photonics circuit or chip is part of a fiber optic gyroscope.

10. A method of fabricating a waveguide device, the method comprising:
providing an integrated optical waveguide (300, 400) comprising:
a wafer substrate (310, 410) having an upper surface;
a cladding layer (320, 420) supported by the wafer substrate, the cladding layer comprising a first material having a first refractive index; and
an optical core (330, 430) embedded in and surrounded by the cladding layer, the optical core comprising a second material having a second refractive index that is higher than the first refractive index;
forming a mask (334, 434) on a portion of an upper surface of the cladding layer over the optical core; and
removing a portion of the cladding layer unprotected by the mask such that the optical core is embedded in a remaining portion of the cladding layer;
wherein the remaining portion of the cladding layer has a thickness that substantially confines acoustic waves to the remaining portion of the cladding layer when an optical signal propagates through the optical core;
wherein the waveguide device is formed as an acoustic ridge or rib waveguide, and is configured to generate a counter-propagating Stokes wave when the optical signal propagates through the optical core.

## Patentansprüche

1. Wellenleitervorrichtung (100, 200), umfassend:
ein Substrat (110, 210) mit einer oberen Fläche und einer ersten Breite;
eine Mantelschicht (120, 220) über der oberen Fläche des Substrats, wobei die Mantelschicht ein erstes Material mit einem ersten Brechungsindex umfasst, wobei die Mantelschicht eine zweite Breite aufweist, die kleiner als die erste Breite ist; und
einen optischen Kern (130, 230), der in die Mantelschicht eingebettet, und von dieser umgeben ist, wobei der optische Kern ein zweites Material mit einem zweiten Brechungsindex umfasst, der höher als der erste Brechungsindex ist, sodass sich ein optisches Signal durch den optischen Kern ausbreitet;
wobei die Mantelschicht, die den optischen Kern umgibt, eine Dicke aufweist, die konfiguriert ist, um Schallwellen im Wesentlichen auf die Mantelschicht zu beschränken, wenn sich das optische Signal durch den optischen Kern ausbreitet;
wobei die Wellenleitervorrichtung ein akustischer Kamm- oder Rippenwellenleiter ist, und konfiguriert ist, um eine sich gegenläufig ausbreitende Stokes-Welle zu erzeugen, wenn sich das optische Signal durch den optischen Kern ausbreitet.

2. Wellenleitervorrichtung nach Anspruch 1, ferner umfassend gegenüberliegende Rippenabschnitte (140, 142) auf der oberen Fläche des Substrats, wobei sich die gegenüberliegenden Rippenabschnitte auf gegenüberliegenden Seiten der Mantelschicht befinden.

3. Wellenleitervorrichtung nach Anspruch 2, wobei die Rippenabschnitte das erste Material mit dem ersten Brechungsindex umfassen.

4. Wellenleitervorrichtung nach Anspruch 1, wobei die obere Fläche des Substrats auf gegenüberliegenden Seiten der Mantelschicht freigelegt ist.

5. Wellenleitervorrichtung nach Anspruch 1, wobei das erste Material der Mantelschicht Siliciumdioxid, Siliciumoxynitrid, Zinkoxid, Aluminiumoxid, Calciumfluorid oder Kombinationen davon umfasst.

6. Wellenleitervorrichtung nach Anspruch 1, wobei das zweite Material des optischen Kerns Silicium, Siliciumnitrid, Siliciumoxynitrid, Siliciumkarbid, Diamant, Siliciumgermanium, Germanium, Galliumarsenid, Galliumnitrid, Galliumphosphid, Lithiumniobat oder Kombinationen davon umfasst.

7. Wellenleitervorrichtung nach Anspruch 1, wobei das erste Material der Mantelschicht eine Schallgeschwindigkeit aufweist, die sich von einer Schallgeschwindigkeit des Substrats unterscheidet.

8. Wellenleitervorrichtung nach Anspruch 1, wobei die Wellenleitervorrichtung in einer integrierten Photonikschaltung oder einem integrierten Photonikchip implementiert ist.

9. Wellenleitervorrichtung nach Anspruch 8, wobei die integrierte Photonikschaltung oder der integrierte Photonikchip Teil eines faseroptischen Gyroskops ist.

10. Verfahren zum Herstellen einer Wellenleitervorrichtung, wobei das Verfahren Folgendes umfasst:
Bereitstellen eines integrierten optischen Wellenleiters (300, 400), umfassend:
ein Wafersubstrat (310, 410), das eine obere Fläche aufweist;
eine Mantelschicht (320, 420), die von dem Wafersubstrat getragen wird, wobei die Mantelschicht ein erstes Material mit einem ersten Brechungsindex umfasst; und
einen optischen Kern (330, 430), der in die Mantelschicht eingebettet, und von dieser umgeben ist, wobei der optische Kern ein zweites Material mit einem zweiten Brechungsindex umfasst, der höher als der erste Brechungsindex ist;
Bilden einer Maske (334, 434) auf einem Abschnitt einer oberen Fläche der Mantelschicht über dem optischen Kern; und
Entfernen eines Abschnitts der Mantelschicht, der durch die Maske nicht geschützt ist, sodass der optische Kern in einen verbleibenden Abschnitt der Mantelschicht eingebettet ist;
wobei der verbleibende Teil der Mantelschicht eine Dicke aufweist, die Schallwellen im Wesentlichen auf den verbleibenden Abschnitt der Mantelschicht beschränkt, wenn sich ein optisches Signal durch den optischen Kern ausbreitet;
wobei die Wellenleitervorrichtung als ein akustischer Kamm- oder Rippenwellenleiter gebildet ist, und konfiguriert ist, um eine sich gegenläufig ausbreitende Stokes-Welle zu erzeugen, wenn sich das optische Signal durch den optischen Kern ausbreitet.

## Revendications

1. Dispositif guide d'ondes (100, 200), comprenant :
un substrat (110, 210) présentant une surface supérieure et une première largeur ;
une couche de gainage (120, 220) par dessus la surface supérieure du substrat, la couche de gainage comprenant un premier matériau à premier indice de réfraction, la couche de revêtement présentant une seconde largeur inférieure à la première largeur ; et
un noyau optique (130, 230) intégré dans la couche de gainage et entouré par cette dernière, le noyau optique comprenant un second matériau à second indice de réfraction supérieur au premier indice de réfraction, de sorte qu'un signal optique se propage à travers le noyau optique ;
la couche de gainage qui entoure le noyau optique ayant une épaisseur conçue pour confiner sensiblement les ondes acoustiques à la couche de gainage lorsque le signal optique se propage à travers le noyau optique ;
le dispositif guide d'ondes étant un guide d'ondes à nervure ou à saillie acoustique et étant configuré pour générer une onde de Stokes à contre-propagation lorsque le signal optique se propage à travers le noyau optique.

2. Dispositif guide d'ondes selon la revendication 1, comprenant en outre des sections de nervures opposées (140, 142) sur la surface supérieure du substrat, les sections de nervures opposées étant situées sur des côtés opposés de la couche de gainage.

3. Dispositif guide d'ondes selon la revendication 2, dans lequel les sections de nervures comprennent le premier matériau à premier indice de réfraction.

4. Dispositif guide d'ondes selon la revendication 1, dans lequel la surface supérieure du substrat est exposée sur les côtés opposés de la couche de gainage.

5. Dispositif guide d'onde selon la revendication 1, dans lequel le premier matériau de la couche de gainage comprend du dioxyde de silicium, de l'oxynitrure de silicium, de l'oxyde de zinc, de l'oxyde d'aluminium, du fluorure de calcium ou des combinaisons de ceux-ci.

6. Dispositif guide d'onde selon la revendication 1, dans lequel le second matériau du noyau optique comprend du silicium, du nitrure de silicium, de l'oxynitrure de silicium, du carbure de silicium, du diamant, du silicium germanium, du germanium, de l'arséniure de gallium, du nitrure de gallium, du phosphure de gallium, du niobate de lithium ou des combinaisons de ceux-ci.

7. Dispositif guide d'ondes selon la revendication 1, dans lequel le premier matériau de la couche de gainage a une vitesse acoustique différente de la vitesse acoustique du substrat.

8. Dispositif guide d'ondes selon la revendication 1, dans lequel le dispositif guide d'ondes est implémenté dans un circuit photonique intégré ou dans une puce photonique intégrée.

9. Dispositif guide d'ondes selon la revendication 8, dans lequel le circuit photonique intégrée ou la puce photonique intégrée fait partie d'un gyroscope à fibre optique.

10. Procédé de fabrication d'un dispositif à guide d'ondes, le procédé comprenant :
l'utilisation d'un guide d'onde optique intégré (300, 400) comprenant :
un substrat de tranche (310, 410) présentant une surface supérieure ;
une couche de gainage (320, 420) soutenue par le substrat de tranche, la couche de gainage comprenant un premier matériau à premier indice de réfraction ; et
un noyau optique (330, 430) intégré dans la couche de gainage et entouré par cette dernière, le noyau optique comprenant un second matériau à second indice de réfraction, supérieur au premier indice de réfraction ;
la formation d'un masque (334, 434) sur une partie d'une surface supérieure de la couche de gainage par dessus le noyau optique ; et
le retrait d'une partie de la couche de gainage non protégée par le masque, de sorte que le noyau optique soit intégré dans une partie restante de la couche de gainage ;
la partie restante de la couche de gainage ayant une épaisseur qui confine sensiblement les ondes acoustiques à la partie restante de la couche de gainage lorsqu'un signal optique se propage à travers le noyau optique ;
le dispositif guide d'ondes étant formé comme un guide d'ondes à saillie ou nervure acoustique et étant configuré pour générer une onde de Stokes à contre-propagation lorsque le signal optique se propage à travers le noyau optique.
